# EUROPÄISCHE PATENTSCHRIFT

(11) **EP 2 742 902 B1**
(45) Veröffentlichungstag und Bekanntmachung des Hinweises auf die Patenterteilung: **27.09.2017**
(21) Anmeldenummer: 14159890.4
(22) Anmeldetag: 04.12.2009
(51) Int. Cl.: A61C 7/28

(54) **Selbstligierendes Bracket für die Orthodontie**
Self-ligating bracket for orthodontics
Bague autoligaturante pour l'orthodontie

(30) Priorität: 05.12.2008 DE 102008060820
(43) Veröffentlichungstag der Anmeldung: 18.06.2014
(62) Teilanmeldung aus: 09795694.0
(73) Patentinhaber: Bernhard Förster GmbH, 75172 Pforzheim (DE)
(72) Erfinder: Förster, Rolf, 75173 Pforzheim (DE)
(74) Vertreter: Twelmeier Mommer & Partner

(56) Entgegenhaltungen:
- WO-A1-99/40871
- US-A- 5 466 151
- US-A1- 2008 113 311

## Beschreibung

Die Erfindung geht von einem Bracket mit den im Oberbegriff des Anspruchs 1 angegebenen Merkmalen aus. Ein solches Bracket ist aus der US 5,322,435 A bekannt. Das bekannte Bracket hat zum Verschließen seines Slots einen Schieber, welcher in seitlichen Führungsnuten verschiebbar ist, welche sowohl in der okklusalen Wand als auch in der gingivalen Wand des Brackets vorgesehen sind. Um den Schieber sowohl in seiner Offenstellung als auch in seiner Schließstellung halten zu können, ist in einer der Wände des Brackets eine zum Schieber hin offene Bohrung vorgesehen, in welcher sich entweder eine Wendelfeder, welche gegen die Unterseite des Schiebers drückt, oder ein zylindrischer Bolzen aus einem elastomeren Kunststoff befindet, welcher über die Öffnung der Bohrung vorsteht und gegen die Unterseite des Schiebers drückt. An der Unterseite des Schiebers sind zwei Ausnehmungen vorgesehen. In die eine Ausnehmung greift die Feder bzw. der Bolzen mit seinem aus der Bohrung vorstehenden Ende in der Offenstellung des Schiebers ein. In die andere Ausnehmung greift die Feder bzw. der Bolzen mit seinem aus der Bohrung vorstehenden Ende in der Schließstellung des Schiebers ein. Ein die beiden Ausnehmungen trennender Vorsprung muss die Wendelfeder bzw. den Bolzen überwinden, wenn der Schieber zwischen seiner Offenstellung und seiner Schließstellung verschoben werden soll. Das Überwinden ist schwierig, weil der Schieber rechtwinklig zu der Richtung, in welcher die Feder in die Bohrung zurückgedrängt werden muss, verschoben wird. Außerdem kann es zu einem Verhaken zwischen der Feder und dem Schieber sowie zu einer Beschädigung der Feder kommen. Der elastomere Kunststoffbolzen lässt sich nicht in die Bohrung zurückdrängen, da der Kunststoff als Feststoff nicht kompressibel ist. Stattdessen muss der Schieber gebogen werden, um ihn über den Kunststoffbolzen hinwegzubewegen. Infolge dessen muss der Schieber entsprechend dünn ausgebildet sein, um die Kraft, die beim Verschieben aufgewendet werden muss, in praktikablen Grenzen zu halten. Bei den geringen Abmessungen, die Brackets typisch haben, ist das bekannte Bracket schwierig zu verwirklichen.

Aus der US 5,613,850 ist ein selbstligierendes Bracket bekannt, in welchem der Schieber mit einer U-förmigen Feder kombiniert ist, welche den Schieber umgibt. Einer der beiden Schenkel der Feder ist durch einen Prägevorgang mit einem Vorsprung versehen, so dass er in Schließstellung mit seinem Vorsprung in eine Ausnehmung eines Bracketflügels einrastet. Durch Niederdrücken dieses Schenkels kann die Feder aus ihrer Raststellung herausbewegt und der Schieber aus seiner Schließstellung heraus geschoben werden. In der Offenstellung wird der Schieber nicht gehalten, so dass er verloren gehen kann, was im Mund besonders unangenehm ist, weil der Schieber verschluckt werden könnte.

Aus der EP 1 679 048 A2 ist ein selbstligierendes Bracket bekannt, dessen Schieber durch eine Feder, welche in einem Loch des Bracketkörpers steckt und mittels eines vorstehenden, zweifach abgewinkelten Schenkels in ein durchgehendes Loch des Schiebers eingreift, in seiner Schließstellung gehalten wird. Die Feder kann aus dem Loch herausgedrückt und der Schieber aus dem Bracket entnommen werden. Die Feder ist nicht in der Lage, den Schieber in der Offenstellung zu halten. Ein weiterer Nachteil besteht darin, dass sich in dem Loch des Schiebers und unter dem Schieber Speisereste ansammeln können, die sich weder durch Zähneputzen mit einer Bürste noch durch Mundspülungen beseitigen lassen.

Aus der EP 1 679 048 A2 ist weiterhin ein selbstligierendes Bracket bekannt, dessen Schieber ein Langloch hat, durch welches ein Sicherungsstift hindurch greift, welcher in einer Bohrung im Bracket verankert wird, nachdem der Schieber in das Bracket eingesetzt ist. Der Spielraum, den der Sicherungsstift im Langloch hat, begrenzt den Weg, um welchen der Schieber im Bracket zwischen Schließstellung und Offenstellung verschoben werden kann. Ist der Sicherungsstift einmal eingesetzt, kann der Schieber nicht mehr entfernt werden. Der Sicherungsstift ist nicht in der Lage, den Schieber in der Schließstellung und in der Offenstellung zu halten. Nur durch Reibung kann es zu einer gewissen Hemmung des Schiebers kommen, wodurch der Schieber weder in der Schließstellung noch in der Offenstellung zuverlässig gehalten werden kann.

Die DE 10 2006 053 215 A1 offenbart ein selbstligierendes Bracket mit einem Schieber, welcher mit einer in der gingivalen Wand des Brackets angeordneten Blattfeder zusammenarbeitet, welche beim Verschieben des Schiebers seitlich ausgelenkt werden kann. Dieses Bracket hat den Vorteil, dass die Blattfeder nicht gegen die Unterseite des Schiebers drückt und dass die Blattfeder den Schieber sowohl in seiner geschlossenen Stellung als auch an seiner offenen Stellung am Bracketkörper festhalten kann. Wenn das Bracket und sein Schieber jedoch pulvermetallurgisch aus einer Keramik hergestellt werden, z. B. durch ein CIM-Verfahren (Ceramic Injection Molding = Keramikpulverspritzgießen), dann ist es schwierig, für ein derartiges Bracket die erforderlichen geringen Maßtoleranzen einzuhalten.

Der vorliegenden Erfindung liegt die Aufgabe zugrunde, ein selbstligierendes Bracket für die Orthodontie zu schaffen, bei welchem der Slot des Brackets durch einen Schieber verschlossen werden kann, der selbst keine Federeigenschaften haben muss, mechanisch stabil ausgebildet werden kann, sowohl in Schließstellung als auch in Offenstellung unverlierbar gehalten wird, leicht zu öffnen und zu schließen ist, dem Bracket ein annehmbares Aussehen verleiht und wenig Gelegenheit für das Ansammeln schwierig zu entfernender Speisereste bietet. Außerdem soll sich die Erfindung für die Herstellung keramischer Brackets eignen.

Der Lösung dieser Aufgabe dient ein Bracket mit den im Anspruch 1 angegebenen Merkmalen. Vorteilhafte Weiterbildungen der Erfindung sind Gegenstand der Unteransprüche.

Bei dem erfindungsgemäßen Bracket sind die Mittel, die den Schieber sowohl in seiner Schließstellung als auch in seiner Offenstellung halten können, eine längliche Ausnehmung, welche in der gingivalen Wand und/oder in der okklusalen Wand des Brackets vorgesehen ist und eine dem Schieber zugewandte Öffnung hat, aus welcher ein in der Ausnehmung liegender und in der Ausnehmung unterstützter Strang mit einem Abschnitt seiner zylindrischen Mantelfläche nach außen vorsteht. Der Strang ist elastisch oder elastomer verformbar. Dadurch kann der Strang ausweichen, z. B. nachgeben, wenn der Schieber beim Verschieben mit einem an seiner Unterseite vorgesehenen Vorsprung oder Anschlag auf den aus der Öffnung der Ausnehmung vorstehenden Abschnitt des Strangs trifft. Unter der Unterseite des Schiebers wird die der Basis des Brackets zugewandte Seite des Schiebers verstanden. Ein am Schieber vorgesehener erster Anschlag schlägt in der Offenstellung des Schiebers an dem Strang an, wodurch der Schieber daran gehindert wird, völlig aus seiner Führung herauszugleiten; vielmehr bleibt der Schieber in seiner Offenstellung mit dem Bracket unverlierbar verbunden.

Der an der Unterseite des Schiebers vorgesehene Vorsprung ist so angeordnet, dass er beim Verschieben des Schiebers in seine Schließstellung vor dem Erreichen seiner Schließstellung an dem Strang anschlägt. Bei weiterem Verschieben des Schiebers bis in seine Schließstellung kann dieser Vorsprung den aus der Ausnehmung hervorstehenden Abschnitt des Stranges überwinden, indem der Strang dem Vorsprung gegen seine elastische oder elastomere Rückstellkraft ausweicht, wobei der Vorsprung den Strang verformt. Entsprechendes geschieht beim Verschieben des Schiebers in seine Offenstellung. Durch das Verformen des Stranges verringert sich das Maß, um welches er aus der Ausnehmung vorsteht. Dadurch wird es ermöglicht, dass der Vorsprung an der Unterseite des Schiebers den Strang zwar mit Widerstand überwindet, jedoch ohne dass der Schieber auf Biegung beansprucht wird.

Wenn der Schieber beim Verschieben in seine Schließstellung mit seinem Vorsprung den Strang überwunden hat, soll dieser wieder in seine ursprüngliche Gestalt zurückfedern. Damit das möglich ist, ist zu beiden Seiten des Vorsprungs, d. h. bezogen auf die Verschieberichtung des Schiebers sowohl auf der Vorderseite als auch auf der Rückseite des Vorsprungs, genügend Raum vorhanden, um den aus der Ausnehmung vorstehenden Abschnitt des Stranges aufzunehmen, vorzugsweise so, dass in dem aufgenommenen Abschnitt des Stranges keine Rückstellkraft mehr vorhanden ist. Der Raum, in welchem der vorstehende Abschnitt des Stranges liegt, wenn sich der Schieber in seiner Schließstellung befindet, muss nicht größer oder nicht wesentlich größer sein als der vorstehende Abschnitt des Stranges, so dass dieser die Lage des Schiebers in seiner Schließstellung spielfrei oder mit wenig Spiel sichert. Der Raum, in welchem sich der vorstehende Abschnitt des Stranges befindet, wenn sich der Schieber in seiner Schließstellung befindet, kann aber auch größer sein als die Erstreckung des Stranges in Bewegungsrichtung des Schiebers, wenn dieser in seiner Schließstellung an einem zweiten Anschlag anschlägt, welcher am Bracketkörper vorgesehen ist.

Die Erfindung hat wesentliche Vorteile:
- Ein Strang, welcher durch seine Bauart und durch seinen liegenden Einbau vom Schieber bei seiner Verschiebebewegung verformt und verdrängt werden kann, macht es möglich, den Strang nur durch Aufbringen einer definierten Kraft zu überwinden, welche von der entstehenden Rückstellkraft des Stranges bestimmt wird, welche im Strang wirkt.
- Beim Überführen des Schiebers von der Offenstellung in die Schließstellung muss nur dann eine Federkraft oder eine elastomere Rückstellkraft überwunden werden, wenn der an der Unterseite des Schiebers vorgesehene Vorsprung auf den Strang trifft und ihn dann durch Verformen überwindet. Solange es nicht zu einem Verformen des Stranges kommt, muss keine Rückstellkraft überwunden werden, weil sich der Strang nicht mit Druck an die Unterseite des Schiebers anlegen muss. Der Strang darf aber der Unterseite des Schiebers anliegen. Die dabei auf den Schieber ausgeübte Kraft ist vorzugsweise gering; sie ist jedenfalls wesentlich geringer als die beim Überwinden des Vorsprungs aufzubringende Kraft.
- Das Verschieben des Schiebers kann, bis der Vorsprung des Schiebers auf den Strang trifft, leichtgängig und ohne besondere Kraft erfolgen. Erst kurz vor Erreichen der Schließstellung steigt der Kraftbedarf an und es kommt zu einem spürbaren Rastvorgang, der anzeigt, dass der Schieber in seiner Schließstellung gesichert ist.
- Beim erstmaligen Einsetzen des Schiebers in seine Führung kann der Strang durch Verformen überwunden werden und der Schieber gelangt zunächst in seine Offenstellung, in welcher er durch den ersten Anschlag, welcher an der Unterseite des Schiebers vorgesehen ist und den Strang beim erstmaligen Einführen des Schiebers in seine Führung überwindet, gegen ein Wiederherausgleiten aus der Führung gesichert wird.
- Der Schieber kann, da er beim Verschieben zwischen der Offenstellung und der Schließstellung nicht auf Biegung beansprucht werden muss, biegesteif ausgeführt werden. Das begünstigt eine Herstellung des Brackets und seines Schiebers aus Keramik und ist günstig, um Kräfte aufzunehmen, die von einem im Slot des Brackets liegenden Drahtbogen auf die Unterseite des Schiebers ausgeübt werden.
- Eine schwer zu reinigende Durchgriffsöffnung ist weder im Bracket noch in seinem Schieber erforderlich.
- Zum Betätigen des Schiebers kann z. B. eine Vertiefung in der Oberseite des Schiebers vorgesehen sein, welche leicht zu reinigen ist. In die Vertiefung kann der behandelnde Kieferorthopäde zum Verschieben des Schiebers mit einem Werkzeug eingreifen. Im übrigen kann die Oberseite des Schiebers glatt ausgebildet sein und mit der Oberseite der angrenzenden Ligaturenflügel fluchten, was nicht nur für das Reinigen günstig ist, sondern dem Bracket auch ein ansprechendes äußeres Erscheinungsbild vermittelt, ohne die technische Funktion des Brackets zu beeinträchtigen.
- Die Erfindung eignet sich für Brackets, die aus irgendeinem der für Brackets bekannten Materialien bestehen können, nämlich für Brackets und Schieber aus Metall, aus Keramik und/oder aus Kunststoff, wobei Keramik bevorzugt ist.

Der Strang kann hohl ausgebildet sein; er ist vorzugsweise aber nicht hohl, um Ablagerungen wie z. B. Plaque zu vermeiden, die nicht entfernt werden können.

Der Strang besteht aus einem elastischen oder elastomeren Material und stützt sich am besten an einem unnachgiebig ausgebildeten Widerlager ab, welches der Unterseite des Schiebers gegenüberliegend in der Ausnehmung im Bracketkörper vorgesehen ist und vorzugsweise deren Endfläche bildet.

Ob ein Strang im Sinne der Erfindung elastisch oder elastomer nachgebend oder unnachgiebig ausgebildet sind, ist im Hinblick auf die Größe der beim Verschieben des Schiebers des selbstligierenden orthodontischen Brackets typisch auftretenden Kräfte zu entscheiden.

In jedem Fall ist der Strang vorzugsweise geradlinig ausgebildet, insbesondere zylindrisch.

Vorzugsweise ragt der Strang höchstens mit seinem halben Umfang aus der Öffnung der Ausnehmung im Bracketkörper heraus. Dadurch kann sichergestellt werden, dass der Strang beim Verschieben des Schiebers nicht aus der Ausnehmung herausgezogen wird. Wegen des zylindrischen Strangs verjüngt sich der über die Öffnung der Ausnehmung vorstehende Umfangsabschnitt des Stranges mit zunehmender Entfernung von der Öffnung der Ausnehmung und erleichtert es, den an der Unterseite des Schiebers vorgesehenen Vorsprung über den Strang hinwegzubewegen. Zu einer solchen Erleichterung trägt es darüber hinaus bei, dass der Strang, solange er nicht durch Verschieben des Schiebers verformt wird, die beiden Längswände der Ausnehmung nicht schon am Rand der Öffnung der Ausnehmung berührt, sondern erst in einem Abstand vom Rand der Ausnehmung, wenn - wie es bevorzugt ist - der Strang mit weniger als der Hälfte seines Umfangs über den Rand der Öffnung der Ausnehmung herausragt. Das erleichtert das Verformen und Verdrängen des Strangs, wenn der Schieber mit seinem an der Unterseite des Schiebers vorgesehenen Vorsprung auf den Strang trifft.

Der Boden der Ausnehmung bildet für den Strang ein Widerlager, welches den Strang unterstützt. Wegen der Verwendung eines nachgiebigen Materials für den Strang kann das Widerlager unnachgiebig sein.

Der Strang hat in der Ausnehmung, in welcher er liegt, vorzugsweise kein seitliches Spiel, um ihm einen guten Halt zu bieten und die Ablagerung von Plaque in der Ausnehmung soweit wie möglich zu verhindern. Die Forderung, dass der Strang in seiner Ausnehmung vorzugsweise kein seitliches Spiel haben soll, bedeutet aber nicht, dass er sich mit seinem verjüngenden Abschnitt nicht von den Seitenwänden der Ausnehmung entfernen darf.

Die Länge der Ausnehmung, in welcher der Strang liegt, ist vorzugsweise kleiner als die Breite der Schieber, damit der Schieber die Ausnehmung und den darin liegenden Strang vollständig überdecken kann. Das schützt die Ausnehmung davor, dass sich in ihr Ablagerungen ansammeln. Die Länge des Stranges und seiner Ausnehmung stimmen vorzugsweise überein.

Vorzugsweise steckt der Strang in der ersten Wand des Brackets. Unter der ersten Wand des Brackets wird jene Wand verstanden, an welcher der Schieber in seine Führung eingeführt wird. Der zweite Anschlag, an welchem der Schieber in seiner Schließstellung anschlägt, ist vorzugsweise an der gegenüberliegenden zweiten Wand des Brackets ausgebildet und vorzugsweise so angeordnet, dass der Schieber mit seinem vorderen Ende am zweiten Anschlag anschlägt. Unter dem vorderen Ende des Schiebers wird jenes Ende verstanden, welches beim Schieben des Schiebers in seine Schließstellung vorne liegt.

Vorzugsweise ist der Strang in der gingivalen Wand des Brackets vorgesehen, wohingegen der zweite Anschlag an der okklusalen Wand vorgesehen ist, so dass der Schieber, wenn das Bracket auf einen Zahn geklebt ist, von der Gingiva herkommend von seiner Offenstellung in seine Schließstellung überführt wird. Der Strang kann aber auch in der okklusalen Wand vorgesehen sein, wohingegen der zweite Anschlag in diesem Fall an der gingivalen Wand vorgesehen ist, so dass der Schieber von okklusal herkommend in Richtung gingival in seine Schließstellung überführt wird. Diese Variante bietet eine besonders hohe Sicherheit gegen ein Aufdrücken des Schiebers beim Beißen.

Das erfindungsgemäße Bracket kommt mit einem einzigen Strang in der gingivalen oder okklusalen Wand des Brackets aus, welcher vorzugsweise mittig in Bezug auf die Länge des Brackets angeordnet ist. Die Länge des Brackets wird in Längsrichtung des Slots gemessen.

Ein Bracket, in welchem sowohl in der gingivalen Wand als auch in der okklusalen Wand des Brackets ein Strang angeordnet ist, ist aufwendiger, aber auch möglich. In diesem Fall dient ein Strang, vorzugsweise der Strang in der gingivalen Wand, dazu, den Schieber gegen Verlieren zu sichern, wenn er sich in der Offenstellung befindet, wohingegen der andere Strang, vorzugsweise der Strang in der okklusalen Wand, dazu dient, den Schieber in seiner Schließstellung zu sichern. Beide Stränge liegen jeweils in einer Ausnehmung, welche sich parallel zur Nut erstreckt, welche der Schieber in seiner Schließstellung überbrückt.

Bei der Ausführungsform des Brackets mit zwei Strängen, auf jeder Seite der Nut je ein Strang, muss an der Unterseite des Schiebers lediglich ein einziger Anschlag ausgebildet sein, an welchem der zweite Strang in der Schließstellung des Schiebers anschlagen kann. Von diesem Anschlag aus benötigt man für den Verschiebebereich des Schiebers zwischen seiner Schließstellung und seiner Offenstellung eine flache, vorzugsweise quaderförmige Ausnehmung, in welche die vorstehenden Umfangsabschnitte der beiden Stränge eingreifen können und die sich in der Verschieberichtung mindestens über eine solche Länge erstreckt, dass in Schließstellung des Schiebers beide Stränge in eine flache Ausnehmung an der Unterseite des Schiebers eingreifen können. Die in der Verschieberichtung gemessene Länge der flachen Ausnehmung an der Unterseite des Schiebers ist daher mindestens gleich dem Abstand der beiden Stränge, gemessen über die einander abgewandten Seiten ihrer vorstehenden Enden.

Ein dazwischen liegender Vorsprung kann bei dieser Variante der Erfindung an der Unterseite des Schiebers entfallen.

Bevorzugt ist die Ausbildung des Brackets so, dass in der gingivalen Wand und/oder in der okklusalen Wand nur ein einziger Strang vorgesehen ist, welcher zylindrisch ausgebildet ist.

Die Öffnung der den Strang aufnehmenden Ausnehmung weist von der Basis des Brackets fort und die Ausnehmung ist zweckmäßigerweise so orientiert, dass sie sich senkrecht oder annähernd senkrecht zum Schieber in die gingivale Wand bzw. in die okklusale Wand des Brackets hinein erstreckt.

Der Schieber ist vorzugsweise ein hauptsächlich ebenes Gebilde, welches in geradlinigen Führungen aufgenommen ist. Es ist aber auch möglich, Führungen vorzusehen, die kreisbogenförmig verlaufen, und in solche Führungen einen entsprechend gekrümmten Schieber einzuführen.

Der Strang kann in der ihn aufnehmenden Ausnehmung fixiert sein, z. B. durch Kleben. Der Strang kann aber auch einfach in seine jeweilige Ausnehmung hineingelegt sein, ohne ihn durch Klebstoff zu fixieren, da er mindestens in der Schließstellung, vorzugsweise auch in der Offenstellung des Schiebers, durch diesen gesichert ist.

Der nachgiebige Strang besteht bevorzugt aus einem Kunststoff mit elastischem oder elastomerem Rückstellvermögen, insbesondere aus Polyoximethylen (POM), aus einem Polyetherketon (PEK) oder aus einem Polyetheretherketon (PEEK), welche hinreichende Festigkeit mit hinreichendem Rückstellvermögen und mit hinreichender Beständigkeit unter den im Mund herrschenden Bedingungen verbinden und hinreichend biokompatibel sind.

Das Bracket und sein Schieber bestehen vorzugsweise aus einer Keramik, das Bracket vorzugsweise aus Aluminiumoxid, der Schieber vorzugsweise aus einer Keramik mit höherer Festigkeit als Aluminiumoxid, insbesondere aus Zirkonoxid. Das ist besonders vorteilhaft in Kombination mit einem Strang aus POM, PEK oder PEEK, weil diese wegen ihrer hellen Farbe den ästhetischen Gesamteindruck eines keramischen Brackets nicht stören, im Gegensatz zu einer metallischen Feder oder zu einem dunklen elastomeren Strang, welche durch einen dünnen keramischen Schieber störend hindurch scheinen würden. Durch die Keramik kann jedoch die Zahnfarbe durchscheinen. Außerdem ermöglicht die Erfindung mit dem Einsatz eines Kunststoffstranges einen Ausgleich von Fertigungstoleranzen des Brackets und seines Schiebers.

Zu einem Toleranzausgleich kommt man in Weiterbildung der Erfindung besonders elegant , wenn man die Ausnehmung durch einen Schlitz bildet, welcher sich von der dem Schieber zugewandten Öffnung durchgehend bis zur Unterseite der Basis des Brackets erstreckt und wenn man in den Schlitz einen Stopfen steckt, an welchem sich der Strang abstützt. Nach dem Einlegen des Stranges in seine Ausnehmung und dem Einsetzen des Schiebers in seine Führung und dem Vorschieben des Schiebers in seine Schließstellung kann man den Stopfen in Richtung auf den Schieber vorschieben, bis der zwischen dem Stopfen und dem Schieber angeordnete Strang die Unterseite des Schiebers berührt, wodurch die Vorschubbewegung des Stopfens endet. Diese Vorschubbewegung des Stopfens kann mit so geringer Kraft ausgeführt werden, dass der nachgebend ausgebildete Strang, wenn er zur Anlage an der Unterseite des Schiebers gelangt, allenfalls unwesentlich gestaucht wird. Eine bleibende Stauchung kann z. B. dadurch vermieden werden, dass man den elastischen bzw. elastomeren Strang und den Stopfen zunächst dem freien Spiel der Kräfte überlässt, nachdem die Vorschubbewegung des Stopfens zum Ende gekommen ist, so dass sich eine eventuelle Stauchung des Stranges durch dessen Rückstellvermögen wieder rückbilden kann. Danach kann man die Lage des Stopfens in dem Schlitz fixieren, z. B. dadurch, dass man den Freiraum zwischen jenem Ende des Stopfens, welcher dem Schieber abgewandt ist, und der Unterseite der Basis des Brackets mit einem aushärtenden Klebstoff füllt. Dabei kann es sich z. B. um einen Klebstoff der Art handeln, wie er für das Aufkleben von Brackets auf Zähne üblicherweise verwendet wird.

Auf diese Weise kann sichergestellt werden, dass unabhängig von Maßtoleranzen, die einen Einfluss auf das Zusammenwirken zwischen dem Bracket und seinem Schieber haben, der Strang, der mit dem Schieber zusammenarbeitet, in dieser Funktion, nämlich mit dem Schieber zusammen zu arbeiten, von den Maßtoleranzen im Wesentlichen unbeeinflusst ist.

Der Stopfen nimmt vorzugsweise den gesamten Querschnitt des Schlitzes ein, um möglichst keinen Freiraum für Ablagerungen zu bieten. Der Stopfen kann aus Keramik bestehen, besteht vorzugsweise aber aus Kunststoff, insbesondere aus einem unnachgiebigen Kunststoff.
Der Stopfen, welcher den Strang abstützt, hat vorzugsweise Rillen, welche in Richtung von der Basis des Brackets zum Schieber verlaufen, d. h. in Richtung lingual-labial. In diese Rillen kann ein Klebstoff eindringen, mit welchem der Stopfen in der Ausnehmung des Bracketkörpers fixiert wird. Dadurch wird die Verankerung des Stopfens verbessert.

Vorzugsweise ist der Stopfen in der Weise abgestuft ausgebildet, dass er in unmittelbarer Nachbarschaft des Stranges den Querschnitt der Ausnehmung nur teilweise ausfüllt und dadurch einen Raum schafft, in den hinein der Strang durch elastische oder - bevorzugt - durch elastomere Verformung verdrängt werden kann.

Weitere Merkmale und Vorzüge der Erfindung werden nachstehend anhand von Ausführungsbeispielen beschrieben, die in den beigefügten Zeichnungen dargestellt sind. Gleiche und einander entsprechende Teile sind in den Ausführungsbeispielen mit übereinstimmenden Bezugszahlen bezeichnet.
- Figur 1: zeigt ein erstes Bracket in einer Ansicht auf die gingivale Seite eines Brackets mit einem Schieber in Offenstellung,
- Figur 2: zeigt die Seitenansicht II des Brackets,
- Figur 3: zeigt den Schnitt A-A des geschlossenen Brackets,
- Figur 3a: zeigt vergrößert ein Detail "J" aus Figur 3,
- Figur 4: zeigt einen Schnitt wie in Figur 3, jedoch mit dem Schieber in seiner Offenstellung,
- Figur 4a: zeigt vergrößert ein Detail "L" aus Figur 4,
- Figur 5: zeigt das Bracket in Draufsicht,
- Figur 6: zeigt das Bracket in einer Ansicht von unten,
- Figur 7: zeigt den Schnitt C-C des Brackets,
- Figur 8: zeigt den Schnitt D-D des Brackets,
- Figur 9: zeigt eine isometrische Ansicht des Brackets in seiner geschlossenen Stellung,
- Figur 10: zeigt das in Figur 9 gezeigte Bracket mit dem Schieber in seiner Offenstellung,
- Figur 11: zeigt eine isometrische Ansicht eines zweiten Brackets, dessen Schieber eine rautenförmige Vertiefung aufweist und in seiner geschlossenen Stellung ist, und
- Figur 12: zeigt das in Figur 11 gezeigte Bracket mit dem Schieber in seiner Offenstellung.

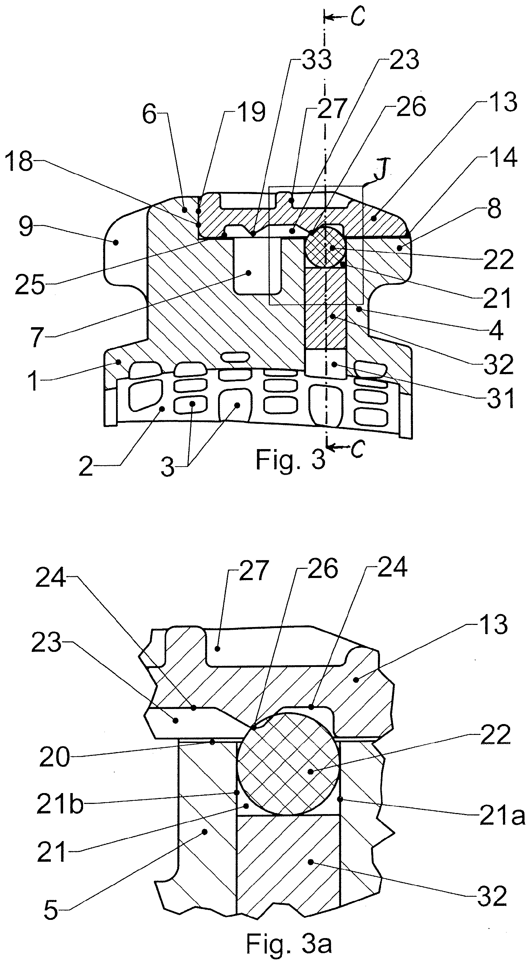

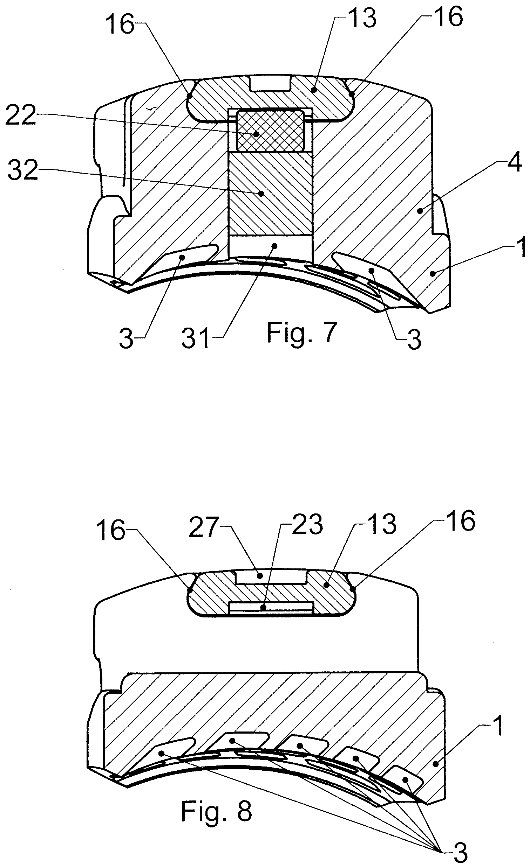

Das in den Figuren dargestellte Bracket hat eine gewölbte Basis 1, deren Wölbung der Vorderseite eines Zahnes angenähert ist. Die Basis 1 hat an ihrer Unterseite 2, welche die linguale Seite des Brackets bildet, in Reihe angeordnete Vertiefungen 3, welche hinterschnitten ausgebildet sind. Im Schnitt, wie er in Figur 3 dargestellt ist, haben die Vertiefungen 3 eine rechteckige Kontur. In einem dazu senkrecht gelegten Schnitt haben die Vertiefungen 3, wie in Figur 7 oder Figur 8 dargestellt, eine rautenförmige Kontur. Auf die Unterseite 2 kann ein Klebstoff aufgetragen werden, um das Bracket auf einen Zahn zu kleben. Durch die Verzahnung der hinterschnittenen Vertiefungen 3 mit dem Klebstoff wird eine gute Haftfestigkeit erzielt. In einer jeden Reihe sind die Vertiefungen 3 und mit ihnen die Hinterschnitte übereinstimmend orientiert. Von Reihe zu Reihe sind sie jedoch abwechselnd mal in die eine und mal in die andere Richtung orientiert. Dadurch wird bei einem auf das Bracket wirkenden Schub in Richtung von mesial nach distal dieselbe Haftfestigkeit erzielt wie bei einem Schub von distal nach mesial und bei einem Schub in Richtung okklusal-gingival oder gingival-okklusal ist die Haftfestigkeit unabhängig von der Schubrichtung hoch.

Die Basis 1 geht in einen Sockel 4 über, auf welchem eine gingivale Wand 5 und eine okklusale Wand 6 stehen. Die beiden Wänden 5 und 6 verlaufen parallel zueinander und sind durch eine Nut 7 getrennt, welche geradlinig durchgehend von distal nach mesial verläuft und nach labial offen ist.

An der gingivalen Wand 5 ist ein in Richtung gingival ragender Ligaturenflügel 8 vorgesehen. An der okklusalen Wand 6 ist ein in Richtung okklusal ragender Ligaturenflügel 9 vorgesehen. An ihnen können in einer dem Fachmann bekannten Weise Ligaturendrähte angebracht werden. Die Ligaturenflügel 8 und 9 können alternativ in jeweils ein Paar Ligaturenflügel unterteilt sein.

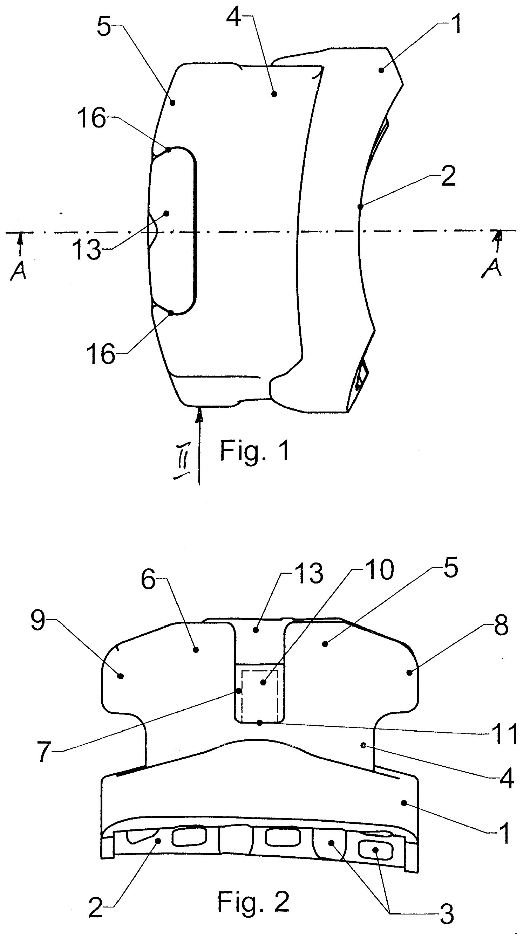

Die Nut 7, welche auch als Slot bezeichnet wird, dient zur Aufnahme eines Drahtbogens 10, welcher insbesondere einen rechteckigen Querschnitt hat, nicht Bestandteil des Brackets ist und deshalb in Figur 2 lediglich gestrichelt mit seinem Umriss dargestellt ist. Durch Spannen des Drahtbogens 10 kann auf den Grund 11 der Nut 7 Druck und auf die Wände 5 und 6 des Brackets ein Drehmoment ausgeübt werden. Zu diesem Zweck ist der lichte Querschnitt der Nut 7 im wesentlichen rechteckig ausgebildet. Er wird im vorliegenden Fall durch den Grund 11 der Nut 7 sowie durch die gingivale Wand 5 und durch die okklusale Wand 6 begrenzt. An den Enden der Nut 7 sind deren Kanten 12 gerundet. Außerdem sind mindestens die die Nut 7 nach oben begrenzenden Kanten eines Schiebers 13 gerundet. Das dient der Reibungsminderung für den in der Nut 7 liegenden Drahtbogen 10 und ist besonders bei starken Fehlstellungen der Zähne von Vorteil, welche einen besonders unregelmäßigen Verlauf des Drahtbogens 10 erfordern.

Eine labiale Ausnehmung 14 in der gingivalen Wand 5 und eine labiale Ausnehmung 15 in der okklusalen Wand 6 nehmen den hauptsächlich eben ausgebildeten Schieber 13 mit rechteckigem Grundriss auf. Die Ausnehmungen 14 und 15 haben zueinander parallele und zum Grund 11 der Nut 7 parallele Hinterschnitte 16, welche zusammen mit dem Grund 17 der Ausnehmung 15 und dem Grund 20 der Ausnehmung 14 eine Gleitführung für den Schieber 13 bilden, welche der Schieber 13 in labialer Richtung nicht verlassen kann, weil die Hinterschnitte 16 das verhindern. Die Ausnehmungen 14 und 15 liegen in einer gemeinsamen Flucht. Die Ausnehmung 14 durchquert die gingivale Wand 5, während die Ausnehmung 15 in der okklusalen Wand 6 an einem Anschlag 18 endet, bei welchem es sich um den in den Patentansprüchen genannten "zweiten" Anschlag handelt.

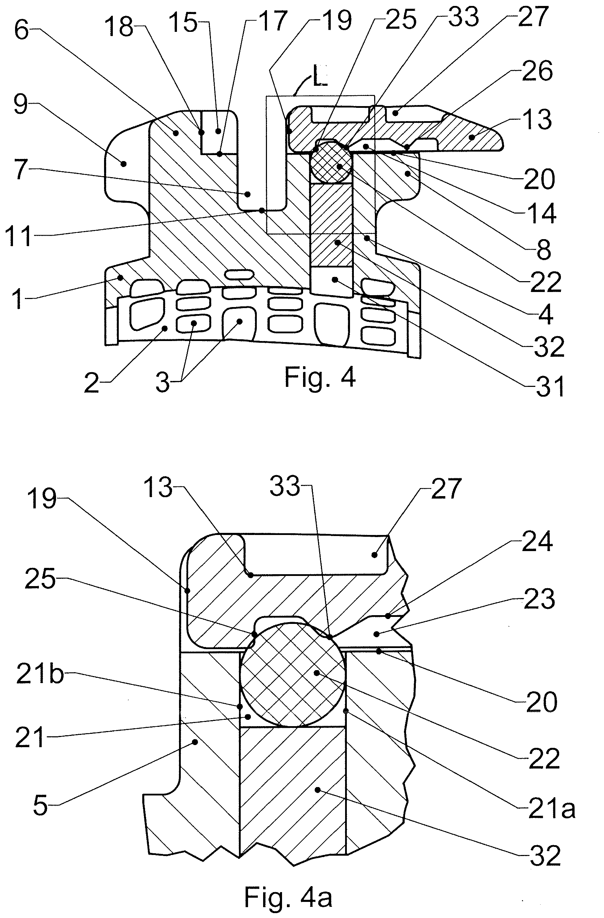

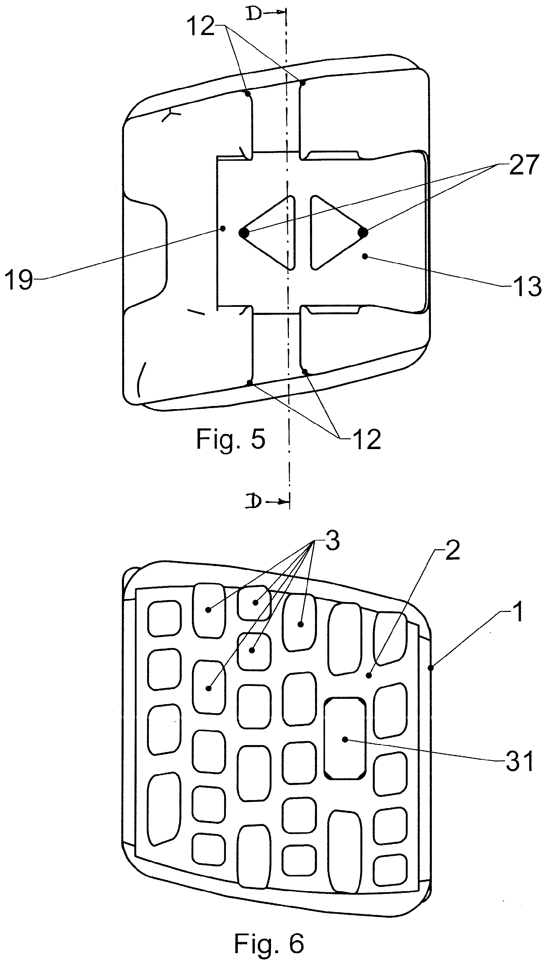

Der Schieber 13 kann in der Führung 15 bis 17 in Richtung gingival-okklusal verschoben werden zwischen einer Offenstellung, die in der Figur 4 dargestellt ist, und einer Schließstellung, die in den Figuren 2, 3 und 5 dargestellt ist. In der Offenstellung ist die Nut 7 von labial her in voller Breite offen. Das vordere Ende 19 des Schiebers 13 schließt vorzugsweise mit der die Nut 7 begrenzenden Oberfläche der gingivalen Wand 5 ab, wie in den Figuren 2, und 7 dargestellt. In der Schließstellung schlägt das vordere Ende 19 des Schiebers 13 am zweiten Anschlag 18 an der okklusalen Wand 6 an, wie es besonders deutlich in Figur 3 dargestellt ist. In der Schließstellung überbrückt der Schieber 13 die Nut 7, so dass ein darin verlaufender Drahtbogen 10 die Nut 7 in labialer Richtung nicht verlassen kann.

In der gingivalen Wand 5 befindet sich eine schlitzförmige Ausnehmung 21, welche sich hauptsächlich parallel zu der die Nut 7 begrenzenden Oberfläche der Wand 5 erstreckt. Die sich in Richtung der Nut 7 erstreckenden, einander gegenüberliegenden Oberflächen 21a und 21b verlaufen parallel zueinander, so dass die schlitzförmige Ausnehmung 21 eine quaderförmige Gestalt hat.

Die schlitzförmige Ausnehmung 21 ist ein Abschnitt des im Querschnitt rechteckigen Schlitzes 31, welcher von der labialen Oberseite des Bracketkörpers unter dem Schieber 13 bis zur Unterseite 2 der Basis 1 durchgeht. In diesem Schlitz 31 steckt ein Stopfen 32, welcher einen zylindrischen Strang 22 unterstützt. Die Lage des Stopfens 32 ist so gewählt, dass der vom Stopfen 32 unterstützte Strang 22 in der Schließstellung des Schiebers 13 der Unterseite des Schiebers 13 anliegt, vorzugsweise ohne einen nennenswerten Druck auf die Unterseite des Schiebers auszuüben. In dieser Lage ist der Stopfen 32 fixiert, vorzugsweise durch Klebstoff.

Mit weniger als der Hälfte seines Umfangs ragt der Strang 22 über den labialen Rand der Ausnehmung 21 hinaus und greift in eine Ausnehmung 23 ein, welche an der Unterseite des Schiebers 13 vorgesehen ist. Die Ausnehmung 23 ist im Grundriss rechteckig. Durch sie wird ein Anschlag 25 gebildet, welcher der über den labialen Rand der Ausnehmung 21 hinausragenden Mantelfläche des Stranges 22 anliegt, wenn sich der Schieber 13 in seiner Offenstellung befindet, siehe Figuren 3 und 3a. Bei dem Anschlag 25 handelt es sich um den in den Patentansprüchen angegebenen "ersten" Anschlag. Durch ihn wird verhindert, dass der Schieber 13 unbeabsichtigt vom Bracket heruntergleiten kann, wenn er sich in seiner Offenstellung befindet.

Um einen in der Nut 7 liegenden Drahtbogen 10 zu sichern, wird der Schieber 13 in seine in der Figur 3 dargestellte Schließstellung überführt, in welcher das vordere Ende 19 des Schiebers 13 am Anschlag 18 an der okklusalen Wand 6 anschlägt. Um den Schieber 13 in seiner Schließstellung halten zu können, ist in der Ausnehmung 23 an der Unterseite des Schiebers 13 ein Vorsprung 26 vorgesehen, der bei dem dargestellten Ausführungsbeispiel keilförmig ausgebildet ist, mit einem Winkel von mehr als 90°zwischen seinen beiden Keilflächen, aber beispielsweise auch im Querschnitt die Form eines Kreissegments haben kann. Der Vorsprung 26 erstreckt sich parallel zur Nut 7 und zum Strang 22. Seine Höhe über dem Grund 24 der Ausnehmung 23 ist kleiner als die Tiefe der Ausnehmung 23.

Der Vorsprung 26 ist so angeordnet, dass er in der Schließstellung des Schiebers 13 auf der der Nut 7 zugewandten Seite des Strangs 22 liegt und Kontakt zum Strang 22 hat, siehe Figur 3a. Vorzugsweise ist die Lage des Vorsprungs 26 so gewählt, dass der Strang 22 in der Schließstellung des Schiebers 13 seine Rückstellkraft im Wesentlichen abgebaut hat, so dass der Strang 22 im wesentlichen kräftefrei ist. Der Vorsprung 26 kann beim Überführen des Schiebers 13 in seine Schließstellung den über den labialen Rand der Ausnehmung 21 hinausragenden Abschnitt des Stranges 22 überwinden. Sobald der Scheitel des Vorsprungs 26 den Strang 22 überwunden hat, wird dieser durch seine Rückstellkraft, die sich zuvor aufgebaut hatte, zurückgestellt in seine im Wesentlichen zylindrische Gestalt. Zum Überführen des Schiebers 13 in seine Offenstellung muss ein größerer Widerstand überwunden werden als beim Schließen, da der Strang 22 in diesem Fall von einer steileren Keilfläche des Vorsprungs 26 überwunden werden muss als beim Schließen des Brackets. Der Widerstand, der beim Öffnen des Brackets zu überwinden ist, genügt, um den Schieber 13 bei den im Mund typischerweise auftretenden Kräfte in seiner Schließstellung zu halten. Um die Kraft zum Öffnen des Brackets aufbringen zu können, ist in der Oberseite des Schiebers 13 mindestens eine Vertiefung 27 vorgesehen, in welche man mit einem Werkzeug, z. B. mit einem Skaler, eingreifen kann, um den Schieber 13 zu verschieben.

Ein zweiter Vorsprung 33 ist an der Unterseite des Schiebers 13 in dessen Ausnehmung 23 vorgesehen, um den Schieber 13 in seiner Offenstellung zu halten. Die Wirkungsweise des Vorsprungs 33 entspricht der des Vorsprungs 26. Der Vorsprung 26 ist vorzugsweise höher als der Vorsprung 33, weil es wichtiger ist, die Schließstellung zu sichern als die Offenstellung zu sichern. Der Vorsprung 33 wird nicht unbedingt benötigt, da der Schieber unter Umständen auch durch sonstige Reibungskräfte in der Offenstellung gehalten werden kann.

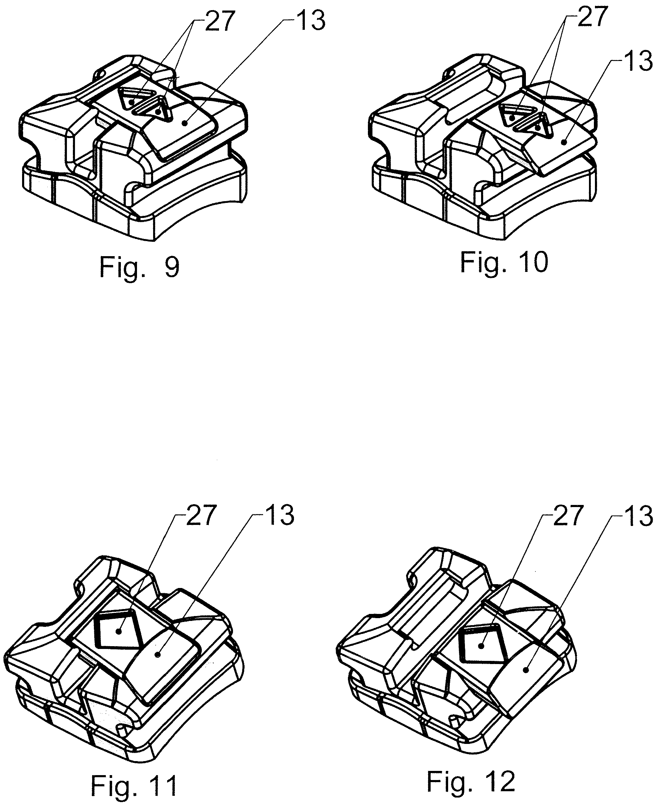

In den Figuren 9 und 10 ist das Bracket in isometrischen Ansichten dargestellt, in denen deutlich zu erkennen, dass sich die Vertiefungen 27 in Verschieberichtung verjüngen, nämlich dreieckig geformt sind. In diese Vertiefungen 27 kann zum Öffnen oder Schließen des Schiebers 13 mit einem Werkzeug eingegriffen werden. Da sich die Vertiefungen 27 jeweils in der für ein Öffnen bzw. Schließen vorzunehmenden Verschieberichtung verjüngen, lässt sich der Schieber 13 auf diese Weise leichter betätigen.

Die beiden Vertiefungen 27 können zu einer einzigen Vertiefung 27 zusammengefasst werden, wie dies in den Figuren 11 und 12 dargestellt ist. Die Vertiefung 27 des in den Figuren 11 und 12 dargestellten Ausführungsbeispiels verjüngt sich ebenfalls in Längsrichtung des Schiebers 13 zu ihren Enden hin, läuft also in der jeweiligen Verschieberichtung spitz zu und erleichtert so das Betätigen des Schiebers 13 mit einem geeigneten Werkzeug.

### Bezugszahlen

- 1: Basis
- 2: Unterseite 3 Vertiefungen 4 Sockel
- 5: gingivale Wand
- 6: okklusale Wand
- 7: Nut, Slot
- 8: gingivaler Ligaturenflügel
- 9: okklusaler Ligaturenflügel
- 10: Drahtbogen
- 11: Grund von 7
- 12: Kanten von 7
- 13: Schieber
- 14: labiale Ausnehmung in 5
- 15: labiale Ausnehmung in 6
- 16: Hinterschnitte
- 17: Grund von 15
- 18: zweiter Anschlag
- 19: vorderes Ende von 13
- 20: Grund von 14
- 21: (schlitzförmige) Ausnehmung in 5
- 21: Oberfläche von 21
- 21b: Oberfläche von 21
- 22: Strang
- 23: Ausnehmung in der Unterseite von 13
- 24: Grund von 23
- 25: Anschlag, erster Anschlag
- 26: Vorsprung auf 24
- 27: Vertiefung
- 31: Schlitz
- 32: Stopfen
- 33: Vorsprung

## Patentansprüche

1. Ein selbstligierendes Bracket für die Orthodontie hat
eine Basis (1), eine von der Basis (1) ausgehende okklusale Wand (6) mit wenigstens einem okklusalen Ligaturenflügel (9),
eine von der Basis (1) ausgehende gingivale Wand (5) mit wenigstens einem gingivalen Ligaturenflügel (8),
eine Nut (Slot 7), welche die okklusale Wand (6) und die gingivale Wand (5) voneinander trennt und sich durchgehend in Richtung von mesial nach distal erstreckt,
und einen Schieber (13), welcher in einer in der okklusalen Wand (6) und/oder in der gingivalen Wand (5) vorgesehenen Führung (14-17) gehalten und in der Führung (14-17) zwischen einer Schließstellung, in welcher der Schieber (13) die Nut (7) überbrückt, und einer Offenstellung, in welcher die Nut (7) in labialer Richtung offen ist, in Richtung gingival-okklusal verschiebbar ist,
Mittel, die den Schieber (13) sowohl in seiner Schließstellung als auch in seiner Offenstellung halten können, und ist
**gekennzeichnet durch** folgende weitere Merkmale:
es ist wenigstens eine längliche Ausnehmung (21) vorgesehen, deren Längsrichtung parallel zur Längsrichtung der Nut (7) verläuft und in welcher ein Strang (22) der eine zylindrische Mantelfläche hat, liegend angeordnet ist, welcher bei Verformung ein elastisches oder elastomeres Rückstellvermögen hat;
die Ausnehmung (21) ist in der gingivalen Wand (5) und/oder in der okklusalen Wand (6) des Brackets vorgesehen und hat eine dem Schieber (13) zugewandte Öffnung, aus welcher der Strang (22) mit einem Abschnitt seiner zylindrischen Mantelfläche nach außen vorsteht;
an dem Schieber (13) ist ein erster Anschlag (25) vorgesehen, welcher in der Offenstellung des Schiebers (13) an dem Strang (22) anschlägt;
an jener Seite des Schiebers (13), welche dem Strang (22) zugewandt ist, ist ein Vorsprung (26) vorgesehen und so angeordnet, dass er beim Verschieben des Schiebers (13) in seine Schließstellung vor dem Einnehmen der Schließstellung an dem Strang (22) anschlägt;
zu beiden Seiten des Vorsprungs (26) ist genügend Raum vorhanden, um den aus der Ausnehmung (21) vorstehenden Abschnitt des Strangs (22) aufzunehmen;
am Bracket ist ein zweiter Anschlag (18) vorgesehen, an welchem der Schieber (13) in seiner Schließstellung anschlägt, nachdem sein Vorsprung (26) den Strang (22) überwunden hat.

2. Selbstligierendes Bracket nach Anspruch 1, **dadurch gekennzeichnet, dass** der Strang (22) in der Ausnehmung (21) unterstützt ist und infolge seines elastischen oder elastomeren Rückenstellvermögens einer Bewegung des Schiebers (13) ausweichen kann.

3. Selbstligierendes Bracket nach Anspruch 2, **dadurch gekennzeichnet, dass** der Vorsprung (26) so angeordnet ist, dass er beim Verschieben des Schiebers (13) in seine Schließstellung vor dem Einnehmen der Schließstellung zunächst an der zylindrischen Mantelfläche des Stranges (22) anschlägt, ehe der Schieber (13) seine Schließstellung einnehmen kann, indem sein Vorsprung (26) den Strang (22) überwindet.

4. Selbstligierendes Bracket nach einem der vorstehenden Ansprüche, **dadurch gekennzeichnet, dass** sich der Strang (22) auf seiner dem Schieber (13) abgewandten Seite an einem unnachgiebig ausgebildeten Widerlager (32) abstützt.

5. Selbstligierendes Bracket nach einem der vorstehenden Ansprüche, **dadurch gekennzeichnet, dass** die Länge der Ausnehmung (21) kleiner ist als die Breite des Schiebers (13).

6. Selbstligierendes Bracket nach einem der vorstehenden Ansprüche, **dadurch gekennzeichnet, dass** der Strang (22) in der gingivalen oder in der okklusalen Wand (5) des Brackets liegt und dass der zweite Anschlag (18) an der ihr gegenüberliegenden Wand (6) des Brackets ausgebildet ist, wobei es besonders bevorzugt ist, wenn der Strang (22) in der gingivalen Wand (5) vorgesehen und der zweite Anschlag (18) an der okklusalen Wand (6) vorgesehen ist.

7. Selbstligierendes Bracket nach einem der vorstehenden Ansprüche, **dadurch gekennzeichnet, dass** der Schieber (13) mit seinem vorderen Ende (19) am zweiten Anschlag (18) anschlägt.

8. Selbstligierendes Bracket nach einem der vorstehenden Ansprüche, **dadurch gekennzeichnet, dass** der Strang (22) höchstens mit seinem halben Umfang aus der Öffnung der Ausnehmung (21) ragt und vorzugsweise nur mit wenig mehr als seinem halben Umfang in der Ausnehmung (21) liegt.

9. Selbstligierendes Bracket nach einem der vorstehenden Ansprüche, **dadurch gekennzeichnet, dass** der Strang (22) ohne seitliches Spiel in der Ausnehmung (21) liegt.

10. Selbstligierendes Bracket nach einem der vorstehenden Ansprüche, **dadurch gekennzeichnet, dass** der Bracketkörper aus Aluminiumoxid besteht, wohingegen der Schieber (13) aus einer Keramik mit höherer Festigkeit als Aluminiumoxid besteht, insbesondere aus Zirkonoxid.

11. Selbstligierendes Bracket nach einem der vorstehenden Ansprüche, **dadurch gekennzeichnet, dass** die Ausnehmung (21) durch einen Schlitz (31) gebildet ist, welcher sich von der dem Schieber (13) zugewandten Öffnung durchgehend bis zur Unterseite der Basis (1) des Brackets erstreckt, und dass in dem Schlitz (31) ein Stopfen (32) steckt, an welchem sich der Strang (22) abstützt.

12. Selbstligierendes Bracket nach Anspruch 11, **dadurch gekennzeichnet, dass** der Stopfen (32) den gesamten Querschnitt des Schlitzes (31) einnimmt.

13. Selbstligierendes Bracket nach Anspruch 11 oder 12, **dadurch gekennzeichnet, dass** der Stopfen (32) Rillen (34) hat, welche in Richtung von der Basis (1) zum Schieber (13) verlaufen.

14. Selbstligierendes Bracket nach einem der Ansprüche 11 bis 13 in Verbindung mit Anspruch 4, **dadurch gekennzeichnet, dass** der Stopfen (32) in der Weise abgestuft ausgebildet ist, dass er in unmittelbarer Nachbarschaft des Strangs (22) den Querschnitt der Ausnehmung (21) nur teilweise ausfüllt.

## Claims

1. A self-ligating bracket for orthodontics having
a base (1),
an occlusal wall (6) extending from the base (1) and having at least one occlusal ligature wing (9),
a gingival wall (5) extending from the base (1) and having at least one gingival ligature wing (8),
a slot (7), which separates the occlusal wall (6) and the gingival wall (5) from one another and extends continuously in the direction from mesial to distal,
and a slide (13), which is held in a guide (14-17) provided in the occlusal wall (6) and/or in the gingival wall (5), and in the guide (14-17) can be shifted in the gingival-occlusal direction between a closed position, in which the slide (13) bridges the slot (7), and an open position, in which the slot (7) is open in labial direction,
means, that can hold the slide (13) in its closed position as well as in its open position,
**characterised by** the following additional features:
at least one elongated recess (21) is provided, the longitudinal direction of which runs parallel to the longitudinal direction of the slot (7) and in which a strand (22) is arranged horizontally, which has a cylindrical lateral surface and has, when becoming deformed, an elastic or elastomeric restoring ability;
said recess (21) is provided in the gingival wall (5) and/or in the occlusal wall (6) of the bracket and has an opening facing the slide (13), out of which opening the strand (22) protrudes to the outside with a section of its lateral surface;
a first stop (25) is provided on the slide (13), which abuts the lateral surface of the strand (22) in the open position of the slide (13);
on that side of the slide (13) that faces the strand (22) a protrusion (26) is provided and is arranged in such a way that upon displacement of the slide (13) into the closed position thereof, before assuming the closed position, it abuts the strand (22), before the slide (13) can assume its closed position;
sufficient space is available on both sides of the protrusion (26), in order to accommodate the section of the strand (22) protruding from the recess (21);
a second stop (18) is provided on the bracket and the slide (13) abuts said second stop in the closed position of the slide (13), once the protrusion (26) thereof has passed the strand (22).

2. A self-ligating bracket according to claim 1, **characterised in that** the strand (22) is supported in the recess (21) and due to its elastic or elastomeric restoring capacity can give way a movement of the slide (13).

3. A self-ligating bracket according to claim 2, **characterised in that** the protrusion (26) is so arranged that upon displacement of the slide (13) into its closed position, before assuming the closed position, it at first abuts the cylindrical lateral surface of the strand (22), before the slide (13) can assume its closed position by its protrusion (26) passing the strand (22).

4. A self-ligating bracket according to any of the previous claims, **characterised in that** the strand (22) is unyielding and rests on an elastically or elastomerically unyielding abutment (32) with its side facing away from the slide (13).

5. A self-ligating bracket according to any of the previous claims, **characterised in that** the length of the recess (21) is smaller than the width of the slide (13).

6. A self-ligating bracket according to any of the previous claims, **characterised in that** the strand (22) lies in the gingival or in the occlusal wall (5) of the bracket and that the second stop (18) is formed on the opposite wall (6) of the bracket, wherein it is especially preferred if the strand (22) is provided in the gingival wall (5) and the second stop (18) is provided at the occlusal wall (6).

7. A self-ligating bracket according to any of the previous claims, **characterised in that** the slide (13) abuts the second stop (18) with the front end (19) of the slide.

8. A self-ligating bracket according to any of the previous claims, **characterised in that** the strand (22) protrudes from the opening of the recess (21) at most with its semi-periphery and preferably lies in the recess (21) only with a little more than with its semi-periphery.

9. A self-ligating bracket according to any of the previous claims, **characterised in that** the strand (22) lies in the recess (21) without lateral play.

10. A self-ligating bracket according to any of the previous claims, **characterised in that** the bracket body consists of aluminium oxide, whereas the slide (13) consists of a ceramic material with greater strength than aluminium oxide, in particular of zirconium oxide.

11. A self-ligating bracket according to any of the previous claims, **characterised in that** the recess (21) is in the shape of a slit (31), which extends from the opening facing the slide (13) continuously to the underside of the base (1) of the bracket, and that a plug (32) is inserted in the slit (31), on which plug (32) the strand (22) rests.

12. A self-ligating bracket according to claim 11, **characterised in that** the plug (32) inserted in the slit (31) occupies the whole cross-section of the slit (31).

13. A self-ligating bracket according to claim 11 or 12, **characterised in that** the plug (32) has grooves (34) which run in the direction from the base (1) to the slide (13).

14. A self-ligating bracket according to any of the claims 11 to 13 in conjunction with claim 4, **characterised in that** the plug (32) is stepped in such a way that it only partially fills up the cross-section of the recess (21) in close vicinity of the strand (22).

## Revendications

1. Support auto-ligaturant pour l'orthodontie possédant
une base (1),
une paroi occlusale (6) partant de la base (1) avec au moins une ailette de ligature occlusale (9),
une paroi gingivale (5) partant de la base (1) avec au moins une ailette de ligature gingivale (8),
une rainure (7), laquelle sépare la paroi occlusale (6) et la paroi gingivale (5) l'une de l'autre et s'étend en continu dans la direction mésiale à distale,
et un poussoir (13), lequel est maintenu dans un guide (14 à 17) prévu dans la paroi occlusale (6) et/ou dans la paroi gingivale (5) et peut être déplacé dans le guide (14 à 17) entre une position de fermeture, dans laquelle le poussoir (13) passe pardessus la rainure (7), et une position d'ouverture, dans laquelle la rainure (7) est ouverte dans la direction labiale, dans la direction gingivale-occlusale,
des moyens qui sont capables de maintenir le poussoir (13) aussi bien dans sa position de fermeture que dans sa position d'ouverture, et est
**caractérisé par** les particularités suivantes :
il est prévu au moins un évidement (21) oblong, dont la direction longitudinale s'étend parallèlement à la direction longitudinale de la rainure (7) et dans lequel une gaine (22) qui a une surface extérieure cylindrique, est disposée couchée, laquelle, lors d'une déformation, a une capacité de rappel élastique ou élastomère ;
l'évidement (21) est prévu dans la paroi gingivale (5) et/ou dans la paroi occlusale (6) du support et a une ouverture tournée vers le poussoir (13), par laquelle la gaine (22) fait saillie vers l'extérieur avec une section de sa surface extérieure cylindrique ;
une première butée (25) est prévue sur le poussoir (13), laquelle bute contre la gaine (22) dans la position d'ouverture du poussoir (13) ;
du côté du poussoir (13), lequel est tourné vers la gaine (22), il est prévu une saillie (26), et qui est agencée de manière à ce que, lors du déplacement du poussoir (13) dans sa position de fermeture, il bute sur la gaine (22) avant d'adopter la position de fermeture ;
des deux côtés de la saillie (26) il y a suffisamment d'espace pour accueillir la section de la gaine (22) faisant saillie hors de l'évidement (21) ;
il est prévu une deuxième butée (18) sur le support, sur laquelle le poussoir (13) bute dans sa position de fermeture après que sa saillie (26) ait surmonté la gaine (22).

2. Support auto-ligaturant selon la revendication 1, **caractérisé en ce que** la gaine (22) est soutenue dans l'évidement (21) et, du fait de sa capacité de rappel élastique ou élastomère, peut éviter un mouvement du poussoir (13).

3. Support auto-ligaturant selon la revendication 2, **caractérisé en ce que** la saillie (26) est disposée de telle manière que, lors du déplacement du poussoir (13) dans sa position de fermeture, avant l'adoption de la position de fermeture, tout d'abord elle bute sur la surface extérieure cylindrique de la gaine (22) avant que le poussoir (13) ne puisse adopter sa position de fermeture, **en ce que** sa saillie (26) surmonte la gaine (22).

4. Support auto-ligaturant selon l'une des revendications précédentes, **caractérisé en ce que** la gaine (22) s'appuie sur son côté opposé au poussoir (13) sur un contre-appui (32) conçu inflexible.

5. Support auto-ligaturant selon l'une des revendications précédentes, **caractérisé en ce que** la longueur de l'évidement (21) est inférieure à la largeur du poussoir (13).

6. Support auto-ligaturant selon l'une des revendications précédentes, **caractérisé en ce que** la gaine (22) repose dans la paroi gingivale ou dans la paroi occlusale (5) du support et que la deuxième butée (18) est conçue sur la paroi (6) du support lui faisant face, où il est particulièrement préféré quand la gaine (22) est prévue dans la paroi gingivale (5) et la deuxième butée (18) est prévue sur la paroi occlusale (6).

7. Support auto-ligaturant selon l'une des revendications précédentes, **caractérisé en ce que** le poussoir (13) bute sur la deuxième butée (18) avec son extrémité avant (19).

8. Support auto-ligaturant selon l'une des revendications précédentes, **caractérisé en ce que** la gaine (22) dépasse de l'ouverture de l'évidement (21) d'au maximum la moitié de son périmètre et repose dans l'évidement (21) de préférence avec moins de son demi périmètre.

9. Support auto-ligaturant selon l'une des revendications précédentes, **caractérisé en ce que** la gaine (22) repose sans jeu latéral dans l'évidement (21).

10. Support auto-ligaturant selon l'une des revendications précédentes, **caractérisé en ce que** le corps de support est constitué d'oxyde d'aluminium, tandis que le poussoir (13) est à base d'une céramique avec une résistance plus élevée que l'oxyde d'aluminium, notamment à base d'oxyde de zirconium.

11. Support auto-ligaturant selon l'une des revendications précédentes, **caractérisé en ce que** l'évidement (21) est formé par une fente (31), laquelle s'étend en continu à partir de l'ouverture tournée vers le poussoir (13) jusqu'au côté inférieur de la base (1) du support et qu'un bouchon (32), sur lequel s'appuie la gaine (22), est enfoncé dans la fente (31).

12. Support auto-ligaturant selon l'une des revendications précédentes, **caractérisé en ce que** le bouchon (32) occupe toute la section transversale de la fente (31).

13. Support auto-ligaturant selon la revendication 11 ou 12, **caractérisé en ce que** le bouchon (32) a des cannelures (34), lesquelles s'étendent dans la direction de la base (1) vers le poussoir (13).

14. Support auto-ligaturant selon l'une des revendications 11 à 13 en combinaison avec la revendication 4, **caractérisé en ce que** le bouchon (32) est conçu de manière étagée de telle manière qu'il ne remplit que partiellement la section transversale de l'évidement (21) dans le voisinage immédiat de la gaine (22).
